# EUROPEAN PATENT APPLICATION

(11) **EP 3 403 735 A1**
(43) Date of publication of application: **21.11.2018**
(21) Application number: 17172101.2
(22) Date of filing: 19.05.2017
(51) Int. Cl.: B09C 1/00, B09C 1/06, F23G 7/14

(54) **A REMEDIATION METHOD AND SYSTEM**

(71) Applicant: MTT Technologies GmbH, 3173 Oberwangen b. Bern (CH)
(72) Inventor: PAROSA, Ryszard, 53-213 Wroclaw (PL)
(74) Representative: Kancelaria Eupatent.pl Sp. z.o.o

(57) **Abstract**

A remediation system, comprising: a heating chamber (20) having an inlet for a contaminated medium to be purified, an outlet for a purified medium and an outlet for exhaust gas emitted while heating the medium; a source of hot air (60) for heating the medium inside the heating chamber (20); microwave generators (21) for heating the medium in the heating chamber; a catalytic combustion unit (30) for catalytic combustion of the exhaust gas emitted from the heating chamber (20) to outlet a purified gas; a heat exchanger (40) for generating a stream of heated air by heating air with a heat from the purified gas; wherein the stream of the heated air from the heat exchanger (40) is introduced to the heating chamber (20).

## Description

### TECHNICAL FIELD

The present invention relates to a remediation method and system, useful in particular to remove contaminants from loose media, such as soil or loose dielectric materials contaminated with oil products.

### BACKGROUND

Soil in the vicinity of petroleum installations, such as oil technology installations, pipelines or petrol stations, is prone to contamination with oil products or other harmful chemical substances.

There are known various methods to remediate the contaminated soil.

Typically, these methods require transportation of the contaminated soil to specially designed, large remediation installations, wherein the soil is heated to high temperatures by means of only gas or oil burners. The efficiency of such methods is often limited due to difficulties in burning the contaminants out of the whole volume of the soil. Moreover, vast amounts of harmful exhaust gases are emitted during the burning. Dedicated installations are necessary to purify these exhaust gases. Furthermore, the need to transport the contaminated soil to the site of the remediation installation is a significant limitation.

Another known method involves applying bacteria to the contaminated soil, which are capable to slowly decompose the oil products. However, such process is slow, dependent on ambient conditions, and requires appropriate selection of bacteria depending on the type of the contaminations in the soil. Moreover, the bacteria are typically not capable to decompose all the harmful substances, therefore the process is not fully effective. In particular, bacteria are not able to decompose heavy metals.

Apart from soil, there are also known media that can be contaminated, in particular with oil products, and require remediation. For example, worn dielectric (ceramic) materials used during oil extraction, such as ceramic materials, may require remediation prior to their disposal. These materials can be purified also in specialized installations, which require to transport the material to the site of the purifying installation.

Therefore, there is a need to provide an alternative system and method for remediation of contaminated media, in particular loose media contaminated with oil products, which would be devoid of at least some of the disadvantages discussed above.

### SUMMARY

There is disclosed herein a remediation system, comprising: a heating chamber having an inlet for a contaminated medium to be purified, an outlet for a purified medium and an outlet for exhaust gas emitted while heating the medium; a source of hot air for heating the medium inside the heating chamber; microwave generators for heating the medium in the heating chamber; a catalytic combustion unit for catalytic combustion of the exhaust gas emitted from the heating chamber to outlet a purified gas; a heat exchanger for generating a stream of heated air by heating air with a heat from the purified gas; wherein the stream of the heated air from the heat exchanger is introduced to the heating chamber.

The system may comprise a valve controlling the distribution of the stream of the heated air stream from the heat exchanger to the heating chamber and to the catalytic combustion unit wherein the valve is controlled according to indications of an oxygen sensor measuring the amount of oxygen in the purified gases cooled down in the heat exchanger.

The heating chamber can be thermally coupled with a cyclone for separation of solid particles from the gases emitted during the purification of the medium.

The cyclone can be connected to the outlet of the heating chamber.

The cyclone can be located inside the heating chamber.

The system may comprise a purified medium container in which the medium is cooled by air, and the heated air is introduced to the heat exchanger for further heating.

The catalytic combustion unit may comprise a reservoir filled with ceramic elements heated by means of microwave generators.

The heating chamber may have a form of a rotating ceramic cylinder driven by a motor.

The heating chamber may have a form of a flow chamber with a fluidized bed formed by a system of slots arranged at its inclined bottom, through which is introduced the stream of hot air.

The heating chamber may have a form of a flow chamber with a fluidized bed formed by a system of slots arranged at its inclined bottom, through which, by means of a pulsating blow system, is introduced the stream of hot air.

The heating chamber may have a form of a batch reservoir with a system of slots arranged in its bottom.

There is also disclosed a remediation method comprising the steps of: introducing a contaminated medium into a heating chamber; heating the contaminated medium in the heating chamber by means of a stream of hot air and by microwave radiation to a temperature of at least 600 °C; purifying exhaust gas, emitted from the heating chamber, in a catalytic combustion unit at a temperature of at least 800 °C to outlet purified gas; generating a stream of a heated air in a heat exchanger, by transferring the heat from the purified gas from the catalytic combustion unit; introducing the stream of heated air from the heat exchanger to the heating chamber.

The flow of a stream of heated air from the heat exchanger to the heating chamber and the catalytic combustion unit can be distributed by means of a valve depending on indications of an oxygen sensor for measuring the amount of oxygen in purified gases cooled down in the heat exchanger.

The gases emitted during the purification of the medium can be purified from solid particles by means of a cyclone thermally coupled with the heating chamber.

The method can be used to remediate the contaminated medium, such as soil or loose dielectric materials, from oil products.

### BRIEF DESCRIPTION OF DRAWINGS

Further details and features of the presented method and system, its nature and various advantages will become more apparent from the following detailed description of the preferred embodiments shown in a drawing, wherein:
Fig. 1 shows a general scheme of a remediation system;
Fig. 2 shows a first embodiment of the remediation system;
Fig. 3 shows a second embodiment of the remediation system;
Fig. 4 shows a third embodiment of the remediation system;
Fig. 5 shows a fourth embodiment of a heating chamber.

### DETAILED DESCRIPTION

The system and method presented herein are dedicated for remediation of various types of media, in particular loose media contaminated with substances having a high calorific value. For example, the media may include oil-contaminated soil from the vicinity of petroleum installations, or ceramic materials used for oil extraction.

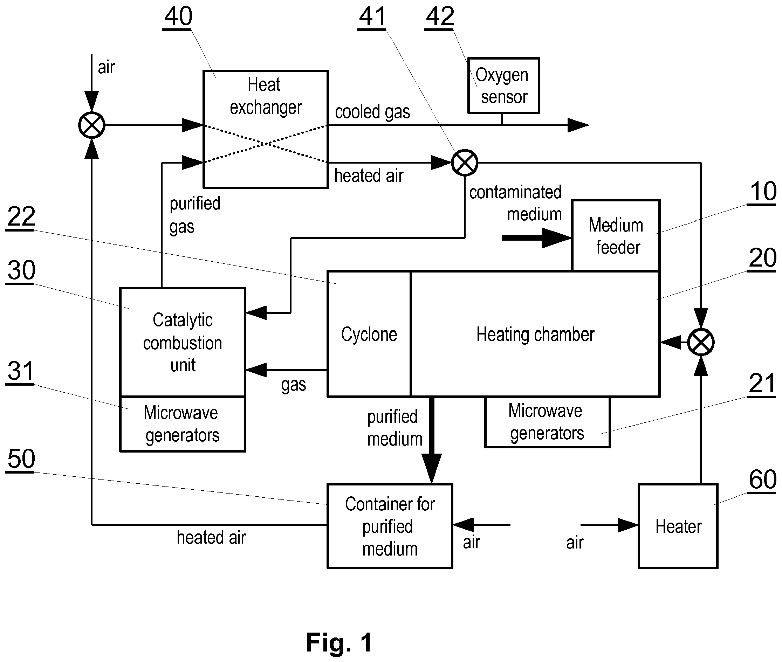

In the general embodiment presented in Fig. 1, the medium to be remedied is introduced to the system by means of a feeder 10, which may comprise an agitator for mixing batches coming from different sources, for example for mixing batches having different caloric values or being of different types. The medium is introduced into a heating chamber 20, wherein it is heated initially directly or by air heated by a heater 60 (which, generally speaking, functions as a source of hot air), such as an oil or a gas burner. Additionally, the medium inside the heating chamber 20 is heated up by means of a microwave energy emitted towards the interior of the chamber 20 by microwave generators 21. During the heating, the medium is displaced along the heating chamber 20. In the heating chamber 20 the medium is heated up to a high temperature, preferably above 600°C, preferably in the range from 600 to 800°C. As a result, the contaminations are burned out from the medium. An exhaust gas emitted in the combustion process is directed through a cyclone 22, which is also heated to a high temperature, to a catalytic combustion unit 30, wherein the exhaust gas is processed in a high temperature, preferably above 800°C, and preferably in the range from 800 to 1100°C.

For example, the catalytic combustion unit 30 may comprise a chamber filled with hot ceramic elements which are heated by means of microwave generators 31. The contaminants in the exhaust gas are effectively oxidized due to catalytic combustion under the high temperature generated by the hot ceramic elements.

The purified hot gas is directed to a heat exchanger 40, where it is cooled down, and the heat of the gas is transferred to air which pumped by a fan. The air heated at the heat exchanger 40 is transferred to the heating chamber 20, where it supports the heating process of the medium being purified. The purified medium is fed into a container 50. Preferably, the process is performed continuously, but it can be also executed cyclically, for batches of the medium to be purified.

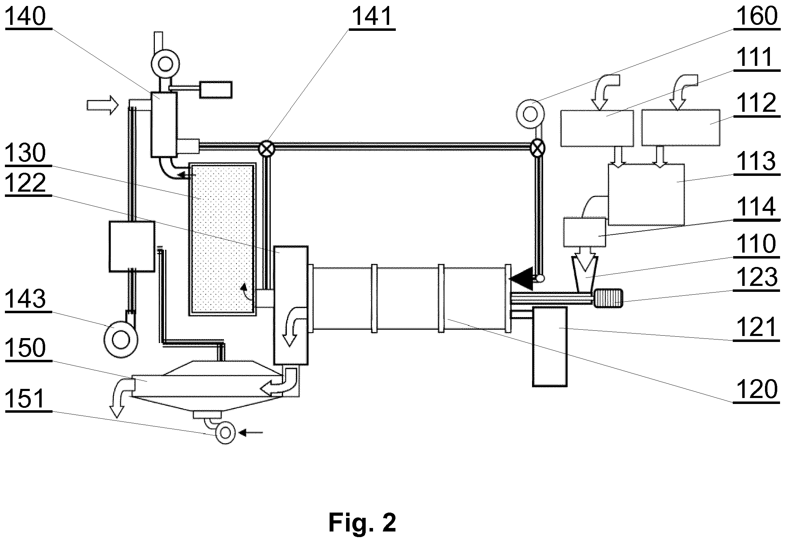

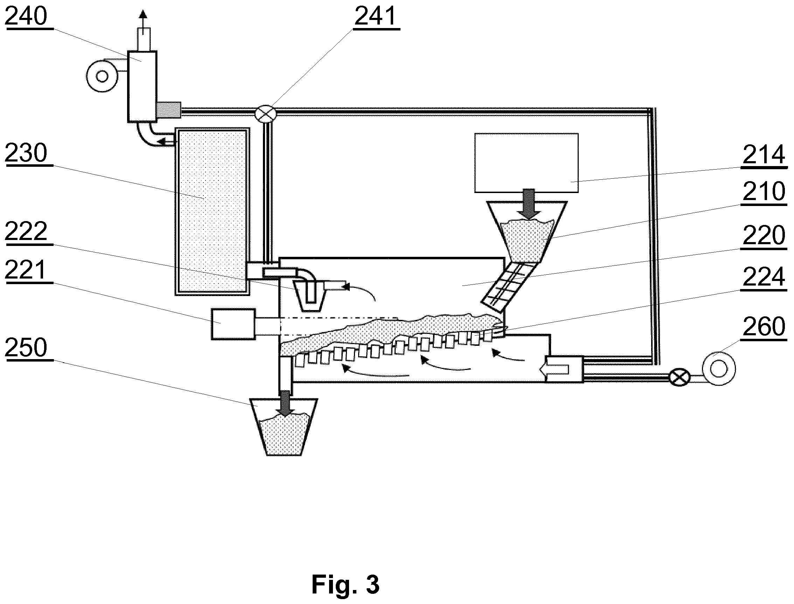

A cyclone 22 separates solid fractions (ash) from the exhaust gas which leaves the heating chamber 20. The cyclone 22 is preferably located inside the heating chamber (as shown in Fig. 3), or adjacent to the wall of the heating chamber at the gas exit (as shown in Fig. 2), so that the exhaust gas leaving the heating chamber 20 is not cooled down, so that it is not necessary to excessively heat up the gas in the catalytic combustion unit 30.

The container 50 for the purified medium may be cooled down by a stream of air pumped by a fan, wherein the pumped air is heated by the hot purified medium inside the container 50 and directed to the heating chamber 20 (directly or via the heat exchanger as shown in Fig. 1). This may further support the process of heating up the medium being purified.

The hot gas leaving the heating chamber 20 has a low content of oxygen, due to the oxidation process which takes place in the heating chamber 20. The deficiency of oxygen in the catalytic combustion unit 30 is disadvantageous, because it slows down the process of catalytic combustion of the contaminated gas. To improve this process, some of oxygen-rich air (comprising typically about 20% of oxygen) heated by the heat exchanger 40 can be introduced to the catalytic combustion unit 30. The amount of the hot air directed to the catalytic combustion unit 30 is controlled by a valve 41, depending on readings of an oxygen sensor 42 (such as a lambda probe) that measures the amount of oxygen in the cooled purified gas leaving the heat exchanger. Preferably, the valve 41 is set such that the amount of oxygen in the cooled exhaust gas is greater than 10%, to ensure efficient combustion of gas in the catalytic combustion unit 30.

Fig. 2 shows a first embodiment of the remediation system, to be used in a continuous process, wherein a heating chamber 120 has a form of a rotating ceramic drum located inside a metal casing. Microwave generators are located on the casing to emit microwave energy towards the interior of the cylinder. The three-digit references 1xx in Fig. 2 indicate equivalent elements marked with two-digit references xx in Fig. 1.

The contaminated medium is directed from containers 111, 112 by an agitator 113 and a sieve 114 to a feeder 110, which introduces the medium to the heating chamber 120.

The heating chamber has a form of a rotatable ceramic cylinder 120, which is rotated by a motor 123. The ceramic material of the cylinder is highly resistant to high temperatures. The contaminated material is heated inside the ceramic cylinder by means of microwaves from microwave generators 121 and by hot air heated by a gas burner 160, as well as by a hot air fed from a heat exchanger 140. While the medium is transferred through the cylinder 120, the contaminations are burned out and the purified medium is provided at an opposite end of the cylinder 120 to a container 150, wherein air stream cooling the purified medium is forced by a fan 151.

At the outlet of the ceramic cylinder 120 there is a cyclone 122, which is thermally coupled with the chamber of the cylinder 120, so that during the separation of ashes from the exhaust gas, the exhaust gas is not excessively cooled down.

The exhaust gas, after purification in the catalytic combustion unit 130, is directed to the heat exchanger 140 wherein the air pumped from the outside by the fan 143 is heated up. The air, comprising about 20% of oxygen, after being heated inside the heat exchanger 140 is directed via a regulating valve 141, partly to the catalytic combustion unit 130 for supporting the process of contaminations combustion (to enhance the process of contaminations combustion due to high oxygen content), and partly to the heating chamber 120 (to enhance the process of heating up the medium to be purified).

Fig. 3 shows a second embodiment of the remediation system, to be used in a continuous process, wherein a heating chamber 120 has a form of a reservoir with a system of slots arranged at its bottom, through which an intensive stream of hot air is introduced, to form a fluidized bed, causing fluidal movement of the medium being purified. The three-digit references 2xx in Fig. 3 indicate equivalent elements marked with two-digit references xx in Fig. 1.

The heating chamber has a form of a metal reservoir 220 with thermally insulated walls, wherein the inner walls are lined up with a ceramic material, which is resistant to high temperatures. The medium being purified is transferred through the reservoir in a fluidized bed, achieved by the stream of hot air from the inclined bottom 224 having a plurality of ceramic pipes or having a form of a ceramic plate with a plurality of openings. The medium being purified is heated by the stream of hot air and by microwaves emitted from microwave generators 221 located at the walls of the chamber.

Inside the chamber 220 there is a cyclone 222 for separating ashes from the exhaust gases. Preferably, the cyclone is made of ceramic rings. Such location of the cyclone 222 is particularly preferable, because it ensures maintaining a high temperature of the walls of the cyclone 222 (which prevents excessive cooling of the gases purified in the cyclone). Moreover, the separated solid fractions (including ashes) fall down directly to the purified medium inside the chamber 220.

The gases emitted during the combustion of contaminations from the medium in the heating chamber 220 are introduced by means of the "hot" cyclone 222 to the catalytic combustion unit 230. The purified hot gas is introduced to the heat exchanger 240, wherein the air pumped from the outside by a fan is heated up. The air heated in the heat exchanger is directed to the heating chamber 220.

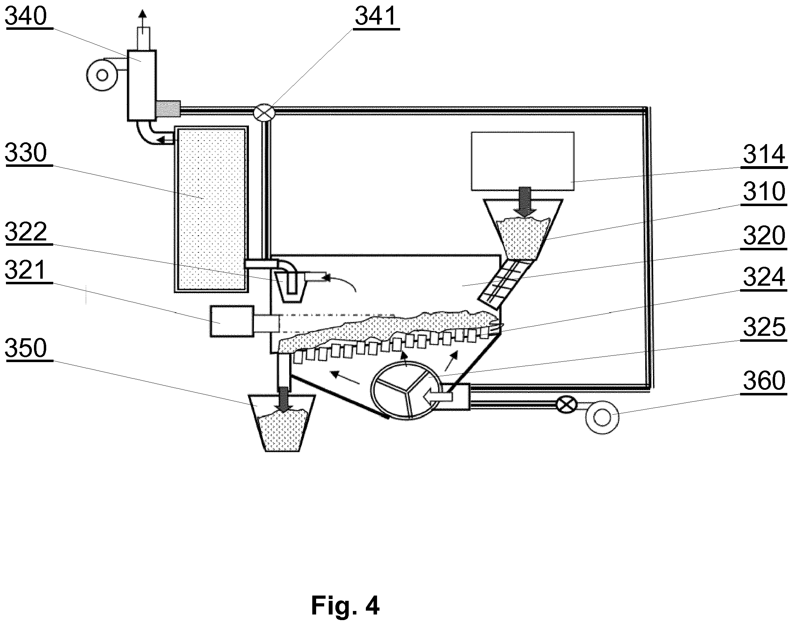

Fig. 4 shows a third embodiment of the remediation system, for use in a continuous process, wherein the heating chamber 220 has a form of a cylinder with a system of slots arranged at its bottom side, through which an intensive stream of hot air is introduced in a pulsed manner, to form a pulsed fluidized bed. The three-digit references 3xx in Fig. 4 indicate equivalent elements marked with three-digit references 2xx in Fig. 3.

As compared to the system of the second embodiment shown in Fig. 3, the system according to the third embodiment comprises a pulsed fluidized bed inside the heating chamber 320. The pulsed motion of the medium at the bottom 324 of the container 320 is caused by a system 325 for blowing hot air in a pulsed manner, according to the known solutions concerning pulsed fluidized beds.

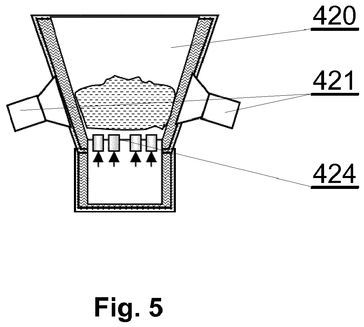

Fig. 5 shows a fourth embodiment of the heating chamber for use in the remediation system, in a batch process. The heating chamber, equipped with microwave generators 421, has a form of a reservoir 420 with a system of slots arranged at its bottom side 424, through which an intensive stream of hot air is introduced. After a batch of medium is processed, the purified medium can be dispatched to a purified medium container, and a new batch of medium to be purified can be introduced to the reservoir 420.

There are also possible further embodiments, comprising an arrangement of elements of two or more of the above-described embodiments.

## Claims

1. A remediation system, comprising:
- a heating chamber (20) having an inlet for a contaminated medium to be purified, an outlet for a purified medium and an outlet for exhaust gas emitted while heating the medium;
- a source of hot air (60) for heating the medium inside the heating chamber (20);
- microwave generators (21) for heating the medium in the heating chamber;
- a catalytic combustion unit (30) for catalytic combustion of the exhaust gas emitted from the heating chamber (20) to outlet a purified gas;
- a heat exchanger (40) for generating a stream of heated air by heating air with a heat from the purified gas;
- wherein the stream of the heated air from the heat exchanger (40) is introduced to the heating chamber (20).

2. The system according to claim 1, further comprising a valve (41) controlling the distribution of the stream of the heated air stream from the heat exchanger (40) to the heating chamber (20) and to the catalytic combustion unit (30) wherein the valve (41) is controlled according to indications of an oxygen sensor (42) measuring the amount of oxygen in the purified gases cooled down in the heat exchanger (40).

3. The system according to any of previous claims, wherein the heating chamber (20) is thermally coupled with a cyclone (22) for separation of solid particles from the gases emitted during the purification of the medium.

4. The system according to claim 3, wherein the cyclone (122) is connected to the outlet of the heating chamber (120).

5. The system according to claim 4, wherein the cyclone (222) is located inside the heating chamber (220).

6. The system according to any of previous claims, comprising a purified medium container (50) in which the medium is cooled by air, and the heated air is introduced to the heat exchanger (40) for further heating.

7. The system according to any of previous claims, wherein the catalytic combustion unit (30) comprises a reservoir filled with ceramic elements heated by means of microwave generators (31).

8. The system according to any of previous claims, wherein the heating chamber (20) has a form of a rotating ceramic cylinder (120) driven by a motor (123).

9. The system according to any of claims 1-7, wherein the heating chamber (20) has a form of a flow chamber (220) with a fluidized bed formed by a system of slots arranged at its inclined bottom (224), through which is introduced the stream of hot air.

10. The system according to any of claims 1-7, wherein the heating chamber (20) has a form of a flow chamber (320) with a fluidized bed formed by a system of slots arranged at its inclined bottom (324), through which, by means of a pulsating blow system (325), is introduced the stream of hot air.

11. The system according to any of claims 1-7, wherein the heating chamber (20) has a form of a batch reservoir (420) with a system of slots arranged in its bottom (424).

12. A remediation method comprising the steps of:
- introducing a contaminated medium into a heating chamber (20);
- heating the contaminated medium in the heating chamber (20) by means of a stream of hot air and by microwave radiation to a temperature of at least 600 °C;
- purifying exhaust gas, emitted from the heating chamber (20), in a catalytic combustion unit (30) at a temperature of at least 800 °C to outlet purified gas;
- generating a stream of a heated air in a heat exchanger (40), by transferring the heat from the purified gas from the catalytic combustion unit (30);
- introducing the stream of heated air from the heat exchanger (40) to the heating chamber (20).

13. The method according to claim 12, wherein the flow of a stream of heated air from the heat exchanger (40) to the heating chamber (20) and the catalytic combustion unit (30) is distributed by means of a valve (41) depending on indications of an oxygen sensor (42) for measuring the amount of oxygen in purified gases cooled down in the heat exchanger (40).

14. The method according to claim 13, wherein the gases emitted during the purification of the medium are purified from solid particles by means of a cyclone (22) thermally coupled with the heating chamber (20).

15. The method according to any of claims 12-14, used to remediate the contaminated medium, such as soil or loose dielectric materials, from oil products.
